# EUROPÄISCHE PATENTSCHRIFT

(11) **EP 0 939 249 B1**
(45) Veröffentlichungstag und Bekanntmachung des Hinweises auf die Patenterteilung: **08.05.2002**
(21) Anmeldenummer: 99103520.5
(22) Anmeldetag: 24.02.1999
(51) Int. Cl.: F16H 55/26

(54) **Zahnstange für einen Zahnstangenantrieb**
Toothed rack for rack drive
Crémaillère pour mécanisme d'entraînement à crémaillère

(30) Priorität: 27.02.1998 DE 19808312
(43) Veröffentlichungstag der Anmeldung: 01.09.1999
(73) Patentinhaber: Alpha Getriebebau GmbH, 97999 Igersheim (DE)
(72) Erfinder: Orlowski, Bernhard, 70176 Stuttgart (DE)
(74) Vertreter: Patentanwalts-Partnerschaft Rotermund + Pfusch

(56) Entgegenhaltungen:
- DE-A- 2 064 346
- DE-A- 2 917 236
- DE-C- 3 923 430
- DE-U- 9 421 613
- PATENT ABSTRACTS OF JAPAN vol. 008, no. 120 (M-300), 6. Juni 1984 & JP 59 026663 A (JIDOSHA KIKI KK), 10. Februar 1984

## Beschreibung

Die Erfindung betrifft eine Zahnstange für einen Zahnstangenantrieb nach dem Oberbegriff des Patentanspruchs 1.

Mit einer solchen Zahnstange soll ein Zahnstangenantrieb geschaffen werden, der einfach herstellbar ist, eine hohe Laufruhe aufweist, gut schmierbar und hochbelastbar ist. Das Ritzel soll mit einer hohen Überdeckung in den Verzahnungsbereich der Zahnstange eingreifen. Auf das antreibende Ritzel sollen trotz einer relativ hohen Schrägverzahnung möglichst keine axialen Reaktionskräfte übertragen werden. Weiterhin sollen durch eine Schrägverzahnung auf die Zahnstange keine Querkräfte ausgeübt werden.

Eine gattungsgemässe Zahnstange mit den Merkmalen des Oberbegriffs des Anspruchs 1 ist bereits aus der DE 2917236 A1 bekannt.

Aus der DE 3923430 C2 ist ein Zahnstangengetriebe bekannt, wobei die Kämmenden Elemente eine Pfeilverzahnung aufweisen.

Der Zahnstangenantrieb soll ein Antrieb mit äußerst hoher Genauigkeit sein, das heißt, der Antrieb soll spielfrei arbeiten. Die Materialien der Zahnstange und des Ritzels sollen hochfeste Stähle sein, die auch gehärtete Einsatz-Stähle sein können. Der Ritzelantrieb soll insbesondere spielarm sein.

Großer Wert wird darüber hinaus auf eine rationelle und damit preisgünstige Herstellbarkeit gelegt.

Es sollen auch Zahnstangen mit großer Länge äußerst genau und einfach herstellbar sein. Als Grundvoraussetzung für eine Lösung des vorgenannten Problemkreises schlägt die Erfindung eine gattungsgemäße Zahnstange mit dem kennzeichnenden Merkmal des Anspruchs 1 vor.

Durch eine erfindungsgemäße Pfeilverzahnung läßt sich eine hohe Überdeckung des in die Zahnstange eingreifenden Ritzels erreichen. Es kann ein großer Schrägungswinkel von beispielsweise 35° für die Zahnflanken gewählt werden, ohne hierdurch Axialkräfte auf das antreibende Ritzel bzw. Querkräfte auf die Zahnstange auszuüben.

Die Erfindung mit den Merkmalen des Anspruchs 1 zeichnet sich durch eine einfache und hochgenaue Herstellbarkeit des Verzahnungsbereiches der Zahnstangeaus. Die Pfeilverzahnung des Ritzels ist vorteilhafterweise in der gleichen Weise ausgebildet, das heißt, das Ritzel besteht ebenfalls aus getrennt hergestellten, nachträglich zusammengesetzten Teilstücken mit den jeweils entgegengerichteten Verzahnungsbereichen.

Um das für die Herstellung der Zahnstangen hochwertige Material auf den Verzahnungsbereich beschränken zu können und um eine einfache Herstellbarkeit zu ermöglichen, ist es zweck-mäßig, die Zahnstange entsprechend den Merkmalen des Anspruchs 1 mit einem Grundkörper mit einem von den Verzahnungsbereichen abweichenden Material zu versehen, von dem die eigentliche, erforderliche Steifigkeit der Zahnstange ausgeht. Dieser Grundkörper kann ein Werkzeugmaschinenbett, ein Werkzeugmaschinenschlitten, ein Handlingsgerät, ein Roboterteil sein oder eine zylindrische Grundform haben. Wichtig ist, daß die sehr genau gefertigte dünnwandige Zahnstange auf einem Grundkörper befestigt nur eine solche Genauigkeit erreichen kann, die der Grundkörper als Flächengenauigkeit bereitstellt. Dieser Grundkörper kann auch zur Führung der Zahnstange dienen und zu diesem Zweck eine zylindrische Grundform besitzen, die lediglich im Verzahnungsbereich für die Verzahnungs-Teilstücke umfangsmäßig abgeflacht ist.

Die Teilstücke mit den Verzahnungsbereichen sollen zweckmäßigerweise lediglich eine geringe Dicke entsprechend der Angabe in Anspruch 2 aufweisen.

Weitere zweckmäßige Ausgestaltungen der erfindungsgemäßen Zahnstange enthalten zusätzliche Unteransprüche.

Die Ansprüche 9 und 10 geben besonders vorteilhafte Herstellungsverfahren an.

Nach dem Anspruch 8 besteht eine besonders zweckmäßige Ausführung darin, daß die Teilstücke mit dem Grundkörper verklebt, laserverschweißt oder verlötet sind. Durch diese Verbindungsarten werden die Herstellungsverfahren nach den Ansprüchen 9 und 10 begünstigt.

Mit einem erfindungsgemäß pfeilverzahnten Zahnstangenantrieb steht ein ausgezeichnetes Genauigkeitsgetriebe zur Verfügung. Das gilt insbesondere bei einem von einem Planetengetriebe angetriebenen, auf die Zahnstange einwirkenden Ritzel. Bei der Verzahnung kann eine Überdeckung von > 4 erreicht werden. Durch den vorgeschlagenen zusammengesetzten Aufbau der Zahnstange ist es möglich, die gegensinnig gerichteten schrägen Verzahnungsbereiche getrennt für sich mit äußerst hoher Genauigkeit und einfach herzustellen und anschließend paßgenau miteinander zu verbinden. Für eine einfache und maßgenaue Herstellung ist die geringe Dicke der Teilstücke mit den Verzahnungsbereichen äußerst wichtig, da hierdurch bei der Herstellung eine bei der Einarbeitung des Verzahnungsprofiles in Zahnstangen bisher übliche Verbiegung der Zahnstange in Längsrichtung vermieden bzw. wirkungslos gemacht werden kann.

Bei einer Herstellung der Verzahnungs-Teilstücke nach dem Verfahren in Anspruch 9 tritt während des Zeitraumes, in dem das Teilstück magnetisch auf einer ebenen Unterlage fest fixiert aufgespannt ist, keine Verbiegung beim Einarbeiten der Verzahnung auf. Eine bei dem Abnehmen des Teilstückes mögliche Verbiegung wird anschließend beim Aufbringen auf den Grundkörper der Zahnstange vollständig wieder aufgehoben. Dies ergibt sich daraus, daß das Teilstück bei dem Grundkörper der Zahnstange erneut auf einer gleichen ebenen Unterlage fixiert ist, auf der die Bearbeitung zuvor erfolgt ist.

Das Verfahren nach Anspruch 10 ermöglicht ein einfaches paßgenaues Aneinanderfügen der getrennt hergestellten Teilstükke auf dem Grundkörper der Zahnstange, der praktisch endlos lang sein kann. Endlos lang sein kann der Grundkörper, weil unendlich viele Teilstücke über die Länge des Grundkörpers erfindungsgemäß äußerst paßgenau aneinandergereiht werden können.

Die bis auf den Verzahnungsbereich zylindrisch ausgebildete Zahnstange kann in einfachen zylindrischen Lagern bei dem erfindungsgemäßen Zahnstangenantrieb verschiebbar gelagert sein. Diese Lagerung ermöglicht eine gute Schmierung. Darüber hinaus ist eine solche zylindrische Zahnstange durch das Ritzel gegenüber einem Verdrehen wirksam und einfach gesichert.

Ein nachfolgend noch näher beschriebenes Ausführungsbeispiel ist in der Zeichnung dargestellt.

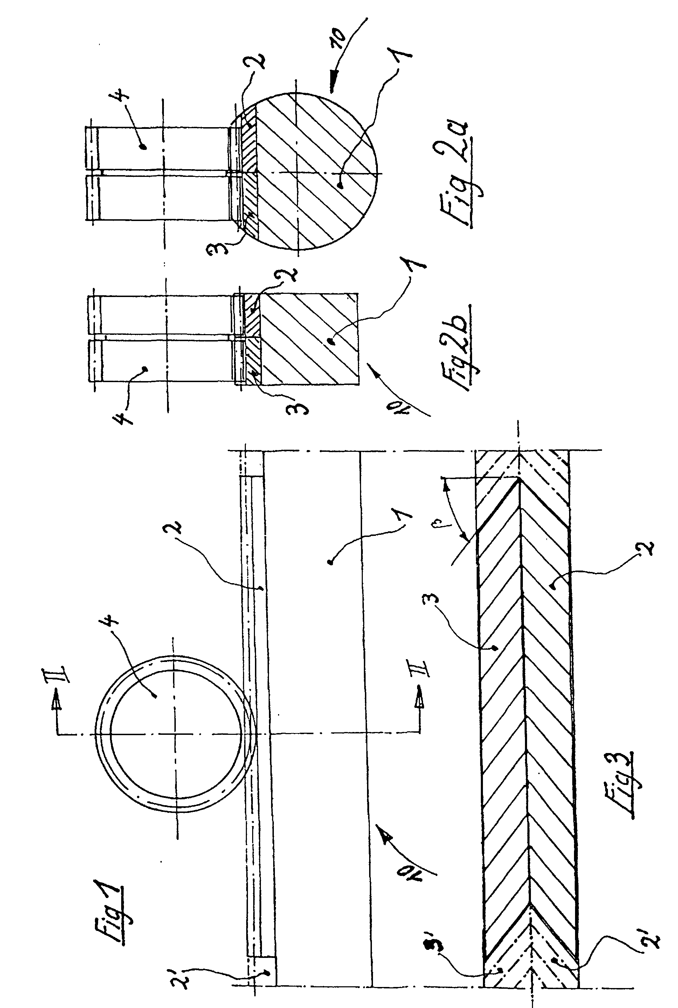

In dieser zeigen
- Fig. 1: eine Ansicht einer Zahnstange mit einem in diese eingreifenden Ritzel,
- Fig. 2a, b: jeweils einen Schnitt durch die Einrichtung nach Fig. 1 längs der Linie II-II für zwei unterschiedliche Ausführungsformen der Zahnstange,
- Fig. 3: einen Ausschnitt auf den Verzahnungsbereich der Zahnstange nach Fig. 1.

Die gezeichnete Zahnstange 10 setzt sich zusammen aus einem Grundkörper 1 und zwei auf diesen fest aufgebrachten Verzahnungs-Teilstücken 2 und 3.

Die vorstehend genannten zusammengesetzten Teile bestehen jeweils aus Stahl, wobei die Teilstücke 2 und 3 aus hochwertigen Stählen bestehen und auch gehärtet sein können. Die Teilstücke 2 und 3 besitzen jeweils schräg entgegengerichtete Zähne. Die Zähne der Verzahnung besitzen eine Schräge von β ≈ 35°. Der Modul der Verzahnung kann sehr klein gewählt werden. Die Dicke der Teilstücke 2 und 3 mißt etwa das 3 bis 6 -fache des vorgenannten Moduls.

Die Verzahnungen der Teilstücke 2 und 3 sind bei einer Magnetaufspannung auf einem Bearbeitungstisch eingearbeitet worden. Die Auflage des Bearbeitungstisches für die Teilstücke 2 und 3 ist in gleicher Form eben ausgebildet wie die Auflagefläche an dem Grundkörper 1 der Zahnstange 10.

Die Teilstücke 2 und 3 sind auf den Grundkörper 1 der einen eckigen oder zylindrischen Querschnitt aufweisen kann, aufgeklebt. Das Befestigen der Teilstücke 2 und 3 auf dem Grundkörper 1 geschieht mit Bezug auf die Darstellung in Fig. 3 wie folgt. Ein erstes Teilstück 2' wird auf den Grundkörper aufgeklebt. Danach wird ein nächstes Teilstück 3' aufgeklebt und dadurch paßgenau dem Teilstück 2' zugeordnet, daß bei einer noch nicht verfestigten Klebeschicht ein Ritzel 4 in den sich überschneidenden Verzahnungsbereich beider nebeneinanderliegender Teilstücke 2' und 3' eingeführt wird. Gleichzeitig erfolgt eine Relativbewegung zwischen dem Ritzel 4 und der Zahnstange 10, wodurch die beiden Teilstücke exakt nebeneinander ausgerichtet werden. Dabei weist das Ritzel 4 eine exakt komplementäre Verzahnung zu der Zahnstange 10 auf. Komplementäre Verzahnung bedeutet hier, daß ein spielfreier Eingriff des Ritzels 4 mit einer Überdeckung von mindestens 4 gegeben ist. Weitere Teilstücke 2 bzw. 3 werden sodann in gleicher Weise auf den Grundkörper 1 der Zahnstange 10 aufgebracht und paßgenau ausgerichtet.

Mit einer Montage-Vorrichtung können die Teilstücke 2,3 einfach und schnell ausgerichtet und zum Befestigen eingefädelt werden.

## Patentansprüche

1. Zahnstange für einen Zahnstangenantrieb mit einem die Zahnstange antreibenden Ritzel, bei dem
das Ritzel (4) und die Zahnstange (10) pfeilverzahnt sind ,**dadurch gekennzeichnet, daß** der pfeilverzahnte Verzahnungsbereich der Zahnstange (10) aus zwei getrennt fertig bearbeitet hergestellten, verzahnten Teilstücken (2, 3) zusammengesetzt ist, wobei das eine Teilstück den in der einen Schrägrichtung verlaufenden Verzahnungsbereich der Pfeilverzahnung und das andere Teilstück den in der anderen Schrägrichtung verlaufenden Verzahnungsbereich der Pfeilverzahnung enthält, und
daß die Teilstücke (2,3) auf einem Grundkörper (1) aufgebracht sind und die Zahnstange bilden.

2. Zahnstange nach Anspruch 1,
**dadurch gekennzeichnet,**
**daß** die Teilstücke (2, 3) mit den jeweils einsinnig schräg verlaufenden Verzahnungsbereichen eine Dicke vom 3 bis 6-fachen des Moduls (m) der Verzahnung aufweisen, wobei die Werte der Module zwischen 0,5 und 2 liegen.

3. Zahnstange nach Anspruch 1 oder 2,
**dadurch gekennzeichnet,**
**daß** der Grundkörper (1) der Zahnstange (10) mit Ausnahme des die Verzahnungs-Teilstücke (2, 3) aufnehmenden Umfangsbereiches als zylindrischer Stab ausgebildet ist.

4. Zahnstange nach Anspruch 3,
**dadurch gekennzeichnet,**
**daß** der zylindrische Umfangsbereich des Grundkörpers 180 Winkelgrad überschreitet.

5. Zahnstange nach Anspruch 3 oder 4,
**dadurch gekennzeichnet,**
**daß** der Verzahnungsbereich einen zylindrischen Raum, der von derjenigen Zylindermantelfläche umspannt wird, in der der zylindrische Umfangsbereich des als zylindrischer Stab ausgebildeten Grundkörpers liegt, nicht nach radial außen überragt.

6. Zahnstange nach einem der vorhergehenden Ansprüche,
**dadurch gekennzeichnet,**
**daß** das Material der Verzahnungs -Teilstücke (2,3) Metall ist.

7. Zahnstange nach Anspruch 6,
**dadurch gekennzeichnet,**
**daß** das Material Stahl, insbesondere gehärteter Stahl ist.

8. Zahnstange nach einem der vorhergehenden Ansprüche,
**dadurch gekennzeichnet,**
**daß** die Teilstücke (2, 3) mit dem Grundkörper (1) verklebt, laserverschweißt oder verlötet sind.

9. Verfahren zu Herstellung der die Verzahnungsbereiche der Zahnstange nach einem der vorhergehenden Ansprüche bildenden Teilstücke mit Dicken zwischen dem 3 und 6-fachen des Verzahnungsmoduls bei Modulwerten zwischen 0,5 und 2,
**dadurch gekennzeichnet,**
**daß** die Teilstücke (2, 3) bei der Bearbeitung ihrer Verzahnungsbereiche auf eine ebene Auflagefläche durch von dieser ausgehende magnetische Anziehungskräfte flächenschlüssig aufgespannt werden.

10. Verfahren zum Aufbringen der die Verzahnungsbereiche der Zahnstange nach einem der vorhergehenden Ansprüche bildenden Teilstücke mit Dicken zwischen dem 3 und 6-fachen des Verzahnungsmoduls bei Modulwerten zwischen 0,5 und 2 auf den Grundkörper der Zahnstange,
**dadurch gekennzeichnet,**
**daß** die Teilstücke (2, 3) an jeweils zuvor fixierten Nachbarteilstücken (2, 3) ausgerichtet werden, indem jeweils ein pfeilverzahntes Gegenstück gleichzeitig in das bereits fixierte und das noch zu fixierende Teilstück (2, 3) eingeführt wird und dort jeweils bis zur erfolgten Fixierung des zuletzt aufgebrachten Teilstückes (2 bzw. 3) verbleibt.

## Claims

1. Toothed rack for a rack drive with a pinion driving the toothed rack, in which the pinion (4) and the toothed rack (10) are herringbone toothed, **characterised in that** the herringbone toothed gearing region of the toothed rack (10) is composed of two separately finished toothed parts (2, 3), the one part containing the gearing region of the herringbone gearing extending in the one oblique direction and the other part containing the gearing region of the herringbone gearing extending in the other oblique direction, and **in that** the parts (2, 3) are attached to a basic component (1) and form the toothed rack.

2. Toothed rack according to claim 1, **characterised in that** the parts (2, 3) with the gearing regions extending obliquely in one direction respectively have a thickness of 3 to 6 times that of the modulus (m) of the gearing, the value of the moduli being between 0.5 and 2.

3. Toothed rack according to claim 1 or 2, **characterised in that** the basic component (1) of the toothed rack (10), with the exception of the peripheral region receiving the gearing parts (2, 3), is designed as a cylindrical rod.

4. Toothed rack according to claim 3, **characterised in that** the cylindrical peripheral region of the basic component exceeds an angle of 180°.

5. Toothed rack according to claim 3 or 4, **characterised in that** the gearing region does not project radially outwards beyond a cylindrical space encompassed by the cylinder surface in which the cylindrical peripheral region of the basic component designed as cylindrical rod is located.

6. Toothed rack according to any of the preceding claims, **characterised in that** the material of the gearing parts (2, 3) is metal.

7. Toothed rack according to claim 6, **characterised in that** the material is steel, in particular hardened steel.

8. Toothed rack according to any of the preceding claims, **characterised in that** the parts (2, 3) are glued, laser welded or soldered to the basic component (1).

9. Method of producing the parts forming the gearing regions of the toothed rack according to any of the preceding claims with thicknesses between 3 and 6 times that of the gearing modulus at modulus values between 0.5 and 2, **characterised in that** the parts (2, 3) are fixed congruently during machining of their gearing regions to a plane bearing face by magnetic forces of attraction issuing therefrom.

10. Method of attaching the parts forming the gearing regions of the toothed rack according to any of the preceding claims with thicknesses between 3 and 6 times that of the gearing modulus at modulus values between 0.5 and 2 to the basic component of the toothed rack, **characterised in that** the parts (2, 3) are aligned on respective adjacent parts (2, 3) fixed in advance, **in that** a respective herringbone toothed counterpiece is simultaneously introduced into the already fixed part and the part still to be fixed (2, 3) and remains there until the part (2 or 3) last applied has been fixed respectively.

## Revendications

1. Crémaillère pour un mécanisme à crémaillère comportant un pignon entraînant la crémaillère, dans laquelle le pignon (4) et la crémaillère (10) sont dentés en chevrons, **caractérisée en ce que** la zone dentée à chevrons de la crémaillère (10) est constituée de deux pièces dentées (2, 3) usinées séparément, une pièce contenant la zone dentée de la denture à chevrons s'étendant dans un sens oblique, et l'autre pièce contenant la zone dentée de la denture à chevrons s'étendant dans l'autre sens oblique et **en ce que** les pièces (2, 3) sont montées sur une embase (1) et forment la crémaillère.

2. Crémaillère selon la revendication 1, **caractérisée en ce que** les pièces (2, 3) présentent avec les zones dentées respectivement orientées obliquement dans un sens unique une épaisseur de 3 à 6 fois le module (m) de la denture, les valeurs des modules étant comprises entre 0,5 et 2.

3. Crémaillère selon la revendication 1 ou 2, **caractérisée en ce que** l'embase (1) de la crémaillère (10) à l'exception de la zone périphérique recevant les pièces dentées (2, 3) est conformée en barre cylindrique.

4. Crémaillère selon la revendication 3, **caractérisée en ce que** la zone périphérique cylindrique de l'embase dépasse 180 degrés d'angle.

5. Crémaillère selon la revendication 3 ou 4, **caractérisée en ce que** la zone dentée ne dépasse pas radialement vers l'extérieur un espace cylindrique, qui est décrit par ladite surface d'enveloppe de cylindre, dans laquelle se situe la zone périphérique cylindrique de l'embase conformée en barre cylindrique.

6. Crémaillère selon l'une des revendications précédentes, **caractérisée en ce que** le matériau des pièces dentées (2, 3) est du métal.

7. Crémaillère selon la revendication 6, **caractérisée en ce que** le matériau est de l'acier, en particulier de l'acier trempé.

8. Crémaillère selon l'une des revendications précédentes, **caractérisée en ce que** les pièces (2, 3) sont collées, soudées au laser ou brasées avec l'embase (1).

9. Procédé de fabrication des pièces formant les zones dentée de la crémaillère selon l'une des revendications précédentes avec des épaisseurs comprises entre 3 et 6 fois le module de denture pour des valeurs de modules comprises entre 0,5 et 2, **caractérisé en ce que** les pièces (2, 3) lors de l'usinage de leurs zones dentées sont bridées sur une surface d'appui plane, par correspondance des surfaces, par des forces de traction magnétiques émanant de celle-ci.

10. Procédé de montage des pièces constituant les zones dentées de la crémaillère selon l'une des revendications précédentes, avec des épaisseurs comprises entre 3 à 6 fois le module de denture pour des valeurs de modules comprises entre 0,5 et 2 sur l'embase de la crémaillère, **caractérisé en ce que** les pièces (2, 3) sont alignées sur des pièces voisines (2, 3) initialement fixées, dans la mesure où chaque fois une pièce opposée à denture en chevrons est introduite simultanément dans la pièce déjà fixée et la pièce à fixer (2, 3) et y demeure chaque fois jusqu'à la fixation opérée de la dernière pièce (2 ou 3) appliquée.
